# EUROPEAN PATENT SPECIFICATION

(11) **EP 3 882 525 B1**
(45) Date of publication and mention of the grant of the patent: **28.02.2024**
(21) Application number: 21163821.8
(22) Date of filing: 19.03.2021
(51) Int. Cl.: F24D 19/06, F24D 19/10, F24F 8/108, F24F 8/22, F24H 3/04, F24H 9/00, F24H 9/02, F24H 9/20, F24F 110/64

(54) **DRY RADIATOR**
TROCKENHEIZER
RADIATEUR A SEC

(30) Priority: 19.03.2020 IT 202000001222 U
(43) Date of publication of application: 22.09.2021
(73) Proprietor: DL RADIATORS S.R.L., 31100 Treviso (TV) (IT)
(72) Inventor: CAMPEOTTO, Alex, 31052 Maserada sul Piave (Treviso) (IT); STABILE, Alessandro, 20159 Milano (IT)
(74) Representative: Rapisardi, Mariacristina

(56) References cited:
- EP-A2- 0 359 095
- WO-A1-2004/020913
- CN-A- 107 101 281
- CN-A- 109 028 567

## Description

The present invention relates to a dry radiator comprising a single structure which support a heat generator integrated with air filtering means. A dry radiator according to the preamble of claim 1 is disclosed in document CN 107101281.

Dry radiators have long been known and available on the market which are provided with electrical resistors for heating air in civil and/or industrial environments, and air purifiers which recycle the ambient air by forcing it, by means of fans, through filters which reduce the dust content thereof and re-introduce it purified into the environment.

It is known that such radiators are traditionally fixed to the wall, and by exploiting the heat dissipated by the resistors with the passage of electrical energy, heat the nearby air, and by triggering a convective motion - the so-called chimney effect - cause an ascending air current which rising upwards, attracts cold air from below which is in turn heated by the radiator, causing a slow circulation of the air in the room from the bottom up through or near the radiator body.

As is known, in such circulation the air carries any sedimentation it encounters on the floor of the room upwards therewith, typically dust, which is thus diffused throughout the entire environment and then falls back to the floor by gravity, compromising the hygiene and well-being of the people present in the room.

As is known, there have long been air purifiers on the market for civil and/or industrial environments, even portable and variously sized, which by means of various kinds of fans withdraw the air from an area of the room and, forcing it through filters, re-introduce it purified into the room, based on the different needs of the user.

Such purifiers are generally placed on the floor, are traditionally bulky and noisy, and do not have a coordinated action with any heating means, even dry radiators, possibly installed in the environment.

There is therefore a need to simplify the structure of the known dry radiators and air purifiers.

The technical task which the present invention sets itself is, therefore, to realise a dry radiator comprising a single structure which supports a heat generator and air filtering means which makes it possible to eliminate the technical drawbacks complained of in the prior art.

As part of this technical task, an object is to realise a dry radiator comprising a single structure which supports a heat generator which has a coordinated action with air filtering means.

Another object is to realise a dry radiator which comprises a single structure which supports a heat generator which has a coordinated action with that of air filtering means, of simple and compact shape.

A not least object of the invention is to realise a dry radiator comprising a single structure which supports a heat generator which has a coordinated action with that of air filtering means which is easy to manage, also synergistically and mutually programmable.

The technical task, as well as these and other objects, according to the present invention are achieved by realising a dry radiator according to claim

Other features of the present invention are further defined in the claims herein below.

Further characteristics and advantages of the invention will become more apparent from the description of a preferred, but not exclusive, embodiment of a dry radiator according to the invention, illustrated by way of indicative and non-limiting example in the accompanying drawings, in which:

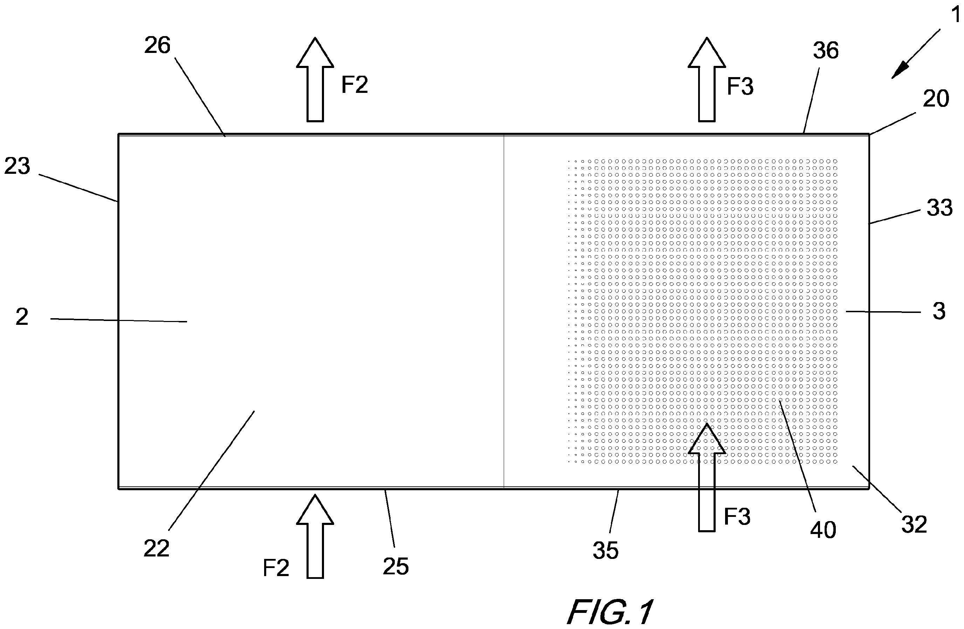

figure 1 shows a front view of the radiator comprising a single structure which supports a heat generator integrated with air filtering means;

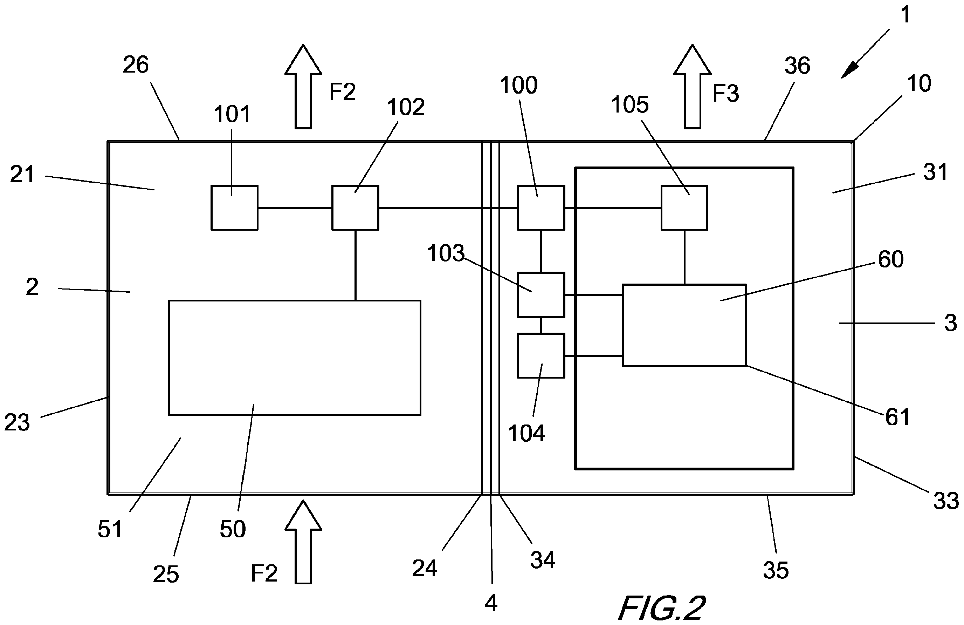

figure 2 shows an open front view of the radiator comprising a single structure which supports a heat generator integrated with air filtering means;

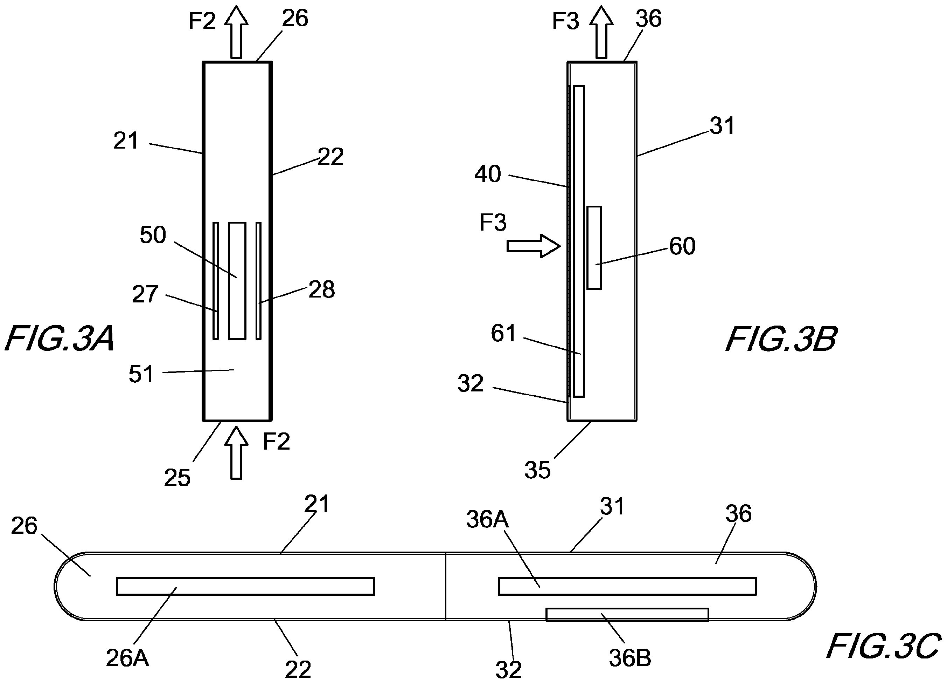

figure 3 A depicts a schematic vertical section at the heat generator;
figure 3 B depicts a schematic vertical section at the air filtering means;
figure 3 C shows a top view of the radiator comprising a single structure which supports a heat generator integrated with air filtering means.

With reference to the aforementioned figures, a dry radiator indicated as a whole with reference number 1 is shown, which comprises a single structure 10 which supports therein a heat generator 2, air filtering means 3 and an outer casing 20.

The heat generator 2 and the air filtering means 3 are mounted side by side in the single structure 10, and are separated by a thermal insulation septum 4.

The outer casing 20 at the heat generator 2 comprises a closed rear wall 21, a closed front wall 22, a closed outer side wall 23 and a closed inner side wall 24.

The lower wall 25 is suitably partially open and the upper wall 26 comprises a partial grille 26 A.

The heat generator 2 suitably comprises electrical resistors 50 which are positioned between the rear wall 21 and the front wall 22.

The electrical resistors 50 preferably comprise stone, ceramics or other suitable materials which dissipate a substantial part of the electrical energy which passes therethrough in heat when powered by an electrical circuit.

The vertical duct 51 is delimited by the closed walls 21, 22, 23, 24 and allows the passage of air heated by the resistors 50 in the convective upward motion thereof according to the flow F2.

The electrical resistors 50 are advantageously delimited by further rear delimiting walls 27 and front delimiting walls 28 which are separate but adjacent to the respective rear wall 21 and front wall 22 of the heat generator 2.

A thermostat 101 is positioned inside the vertical duct 51 in the flow F2 of the heated air and downstream of the electrical resistors 50 and is connected with the means for activating and controlling 102 the electrical resistors 50.

The outer casing 20 at the air filtering means 3 comprises a closed rear wall 31, a closed outer side wall 33 and a closed inner side wall 34 and a closed lower wall 35.

The front wall 32 comprises a suction grille 40 and the upper wall 36 suitably comprises a partial grille 36A.

The closed inner side 24 wall of the heat generator 2 and the closed inner side wall 34 of the filtering means 3 delimit and configure with the insertion of suitable insulating materials the thermal insulation septum 4 which physically separates the heat generator 2 from the filtering means 3.

The air filtering means 3 comprises a ventilation unit 60 positioned between the rear wall 31 and the front wall 32 and a filtering unit 61 positioned near the front wall 32 and comprised between the suction grille 40 and the ventilation unit 60.

Advantageously, the filtering unit 61 is vertically removable in and removable from the position thereof through an opening 36B in the upper wall 36.

The ventilation unit 60 is typically comprising a high prevalence impeller, having an axial suction and a vertical radial delivery upwards.

The filtering unit 61 typically comprises a filter pack comprising a first dust filter which performs a first coarse filtration of the largest and bulkiest impurities in the air flow, a subsequent HEPA (High Efficiency Particulate Air) type filter capable of filtering impurities up to 0.3 microns in diameter, a further subsequent activated carbon filter.

The air filtering means 3 can comprise at least one sensor of the amount of dust present in the entering air 103 and a sensor of the amount of dust present in the exiting air 104, or a single sensor, positioned respectively upstream and downstream of the filtering unit 61 in the flow F3 of the air treated by the purifier 3.

Electronic control and management means 100 suitably collects and processes the data from the thermostat 101 of the heat generator 2, the sensor of the amount of dust present in the entering air 103 and the sensor of the amount of dust present in the exiting air 104 of the air filtering means 3, and intervenes on the activation and control means 102 of the electrical resistors 50 of the heat generator 2 and on the activation and control means 105 of the ventilation unit 60.

The operation of the dry radiator comprising a single structure which supports a heat generator integrated with air filtering means according to the invention is evident from what is described and illustrated and, in particular, is substantially as follows.

Upon switching on through the electronic control and management means 100, the electrical resistors 50, heated by the passage of electric power supply, transfer heat to the air mass nearby and adjacent to the heat generator 2, triggering a convective motion of the air through the vertical duct 51 according to the vertical flow F2.

The thermostat 101 detects the temperature of the heated air and sends the data to the control and management means 100, which is suitably programmed to intervene on the activation and control means 102 of the electrical resistors 50, interrupting and/or restoring the passage of current and the production of heat of the heat generator 2.

The control and management means 100 suitably also activates the ventilation unit 60 of the air filtering means 3, which is programmed to activate and/or deactivate based on the data detected by the sensor of the amount of dust present in the entering air 103 and the sensor of the amount of dust present in the exiting air 104 according to the flow F3 through the filtering means 61.

The thermal insulation septum 4 thermally separates the vertical duct 51 of the heated air from the filtering means 61.

The air flow path F3 comprises a horizontal passage through the suction grille 40 and the filtering unit 61, then through an axial suction of the ventilation unit 60 and vertical centrifugal expulsion through the upper partial grille 36 A.

Through suitable and different programmes of the control and management means 100, the operation of the dry radiator according to the invention can alternatively be:
- only air heating through the activation of the heat generator 2;
- only air purification through the activation of the air filtering means 3;
- air heating and purification through the parallel activation of the heat generator 2 and the air filtering means 3;
- air heating and purification through the automatic and coordinated joint activation of the heat generator 2 and the air filtering means 3, upon reaching predetermined temperature and/or dust concentration thresholds.

In practice, it has been found how a dry radiator comprising a single structure which supports a heat generator integrated with air filtering means according to the invention is particularly advantageous for a coordinated action of the heat generator with that of air filtering means which is easy to manage also synergistically and mutually programmable, in a single, simple and compact structure.

A dry radiator comprising a single structure which supports a heat generator integrated with air filtering means thus conceived is subject to numerous modifications and variants falling within the scope of the invention that is defined by the appended claims.

For example, it may also be useful to integrate sterilising means such as a bactericidal lamp, in particular a UV lamp, in the radiator.

Moreover, all details may be replaced with other technically equivalent elements as defined by the appended claims.

In practice, the materials used, as well as the dimensions, can be any according to the needs and the state of the art.

## Claims

1. A dry radiator (1) comprising a single structure (10) which supports an electronic control and management means (100), a vertical duct (51) and heat generator (2) housed in said vertical duct (51) travelled upwards by convective motion by an upward flow of heated air wherein the heat generator (2) comprises electrical resistors (50) configured to transfer heat to the air mass nearby and adjacent to said heat generator (2), and an outer casing (20), wherein said single structure (10) supports air filtering means (3) from the dust raised by the convective motion of the air, **characterised in that** said filtering means (3) and said heat generator (2) are laterally spaced and separated by a thermally insulating thermal insulation septum (4), and **in that** said electrical resistors (50) are configured to trigger a convective motion of the air through said vertical duct (51) according to a vertical flow (F2), when they are heated by the passage of electric power supply upon switching on through said electronic control and management means (100).

2. The dry radiator (1) according to claim 1, **characterised in that** said filtering means (3) comprises a ventilation unit (60) and a filtering unit (61).

3. The dry radiator (1) according to any one of previous claims, **characterised in that** said ventilation unit (60) is a centrifugal fan having a horizontal axial suction and a vertical radial delivery upwards.

4. The dry radiator (1) according to the preceding claim, **characterised in that** the front wall (32) of said outer casing (20) has a suction grille (40) for said filtering unit (61).

5. The dry radiator (1) according to the preceding claim, **characterised in that** said filtering unit (61) is interposed between said suction grille (40) and said ventilation unit (60).

6. The dry radiator (1) according to the preceding claim, **characterised in that** the upper wall (36) of said outer casing (20) has a partial grille (36 A) for air delivery from said ventilation unit (60).

7. The dry radiator (1) according to any one of claims, **characterised in that** said filtering unit (61) is housed removably from above through an opening (36B) of said upper wall (36) of said outer casing (20).

8. The dry radiator (1) according to claim 2, **characterised in that** said electronic control and management means (100) is connected to said ventilation unit (60) of said air filtering means (3) and to a sensory unit comprising a control thermostat (101) of the electrical resistors (50) of said heat generator (2).

9. The dry radiator (1) according to the preceding claim, **characterised in that** said sensors further comprise at least one sensor of the amount of dust present in the entering air (103) and a sensor of the amount of dust present in the exiting air (104).

10. The dry radiator (1) according to the preceding claim, **characterised in that** said control and electronic management means (100) activates said ventilation unit (60) when said at least one sensor of the amount of dust present in the entering air (103) signals having exceeded a limit value of dust concentration in the air.

11. The dry radiator (1) according to the preceding claim, **characterised in that** it comprises a bactericidal lamp.

## Patentansprüche

1. Ein trockener Heizkörper (1), der eine einzelne Struktur (10) umfasst, die eine elektronische Steuerungs- und Verwaltungseinheit (100), einen vertikalen Kanal (51) und einen Wärmeerzeuger (2) unterstützt, der sich in diesem vertikalen Kanal (51) befindet und durch aufsteigende Konvektionsbewegung von aufsteigender heißer Luft durchfahren wird, wobei der Wärmeerzeuger (2) elektrische Widerstände (50) umfasst, die so konfiguriert sind, dass sie Wärme an die Luftmasse in der Nähe und neben dem Wärmeerzeuger (2) übertragen, und ein äußeres Gehäuse (20), wobei die besagte einzelne Struktur (10) Filtermittel (3) unterstützt, die durch die konvektive Bewegung der Luft aufgewirbelten Staub aufnehmen, **gekennzeichnet dadurch, dass** besagte Filtermittel (3) und besagter Wärmeerzeuger (2) seitlich voneinander getrennt und durch eine thermisch isolierende Trennwand (4) getrennt sind, und dass besagte elektrischen Widerstände (50) so konfiguriert sind, dass sie eine Konvektionsbewegung der Luft durch besagten vertikalen Kanal (51) gemäß einem vertikalen Strom (F2) auslösen, wenn sie durch die Zufuhr von elektrischer Energie beim Einschalten über besagte elektronische Steuerungs- und Verwaltungseinheit (100) erhitzt werden.

2. Der trockene Heizkörper (1) nach Anspruch 1, **gekennzeichnet dadurch, dass** besagte Filtermittel (3) eine Belüftungseinheit (60) und eine Filtereinheit (61) umfassen.

3. Der trockene Heizkörper (1) nach einem der vorherigen Ansprüche, **gekennzeichnet dadurch, dass** besagte Belüftungseinheit (60) ein Zentrifugalgebläse mit horizontaler axialer Ansaugung und vertikalem radialen Auftrieb nach oben ist.

4. Der trockene Heizkörper (1) nach dem vorherigen Anspruch, **gekennzeichnet dadurch, dass** die Vorderwand (32) des äußeren Gehäuses (20) einen Ansauggitter (40) für besagte Filtereinheit (61) hat.

5. Der trockene Heizkörper (1) nach dem vorherigen Anspruch, **gekennzeichnet dadurch, dass** besagte Filtereinheit (61) zwischen besagtem Ansauggitter (40) und besagter Belüftungseinheit (60) eingeschoben ist.

6. Der trockene Heizkörper (1) nach dem vorherigen Anspruch, **gekennzeichnet dadurch, dass** die obere Wand (36) des äußeren Gehäuses (20) ein teilweises Gitter (36 A) für die Luftabgabe von besagter Belüftungseinheit (60) hat.

7. Der trockene Heizkörper (1) nach einem der Ansprüche, **gekennzeichnet dadurch, dass** besagte Filtereinheit (61) von oben durch eine Öffnung (36B) der oberen Wand (36) des äußeren Gehäuses (20) herausnehmbar untergebracht ist.

8. Der trockene Heizkörper (1) nach Anspruch 2, **gekennzeichnet dadurch, dass** besagte elektronische Steuerungs- und Verwaltungseinheit (100) mit besagter Belüftungseinheit (60) der Filtermittel (3) und mit einer Sensorik-Einheit verbunden ist, die einen Steuerthermostat (101) der elektrischen Widerstände (50) des Wärmeerzeugers (2) umfasst.

9. Der trockene Heizkörper (1) nach dem vorherigen Anspruch, **gekennzeichnet dadurch, dass** die Sensoren ferner mindestens einen Sensor für die Menge an Staub in der einströmenden Luft (103) und einen Sensor für die Menge an Staub in der austretenden Luft (104) umfassen.

10. Der trockene Heizkörper (1) nach dem vorherigen Anspruch, **gekennzeichnet dadurch, dass** besagte Steuer- und Verwaltungseinheit (100) besagte Belüftungseinheit (60) aktiviert, wenn besagter mindestens eine Sensor für die Menge an Staub in der einströmenden Luft (103) ein Überschreiten eines Grenzwerts der Staubkonzentration in der Luft anzeigt.

11. Der trockene Heizkörper (1) nach dem vorherigen Anspruch, **gekennzeichnet dadurch, dass** er eine bakterizide Lampe enthält.

## Revendications

1. Un radiateur sec (1) comprenant une structure unique (10) qui supporte un moyen de commande électronique et de gestion (100), un conduit vertical (51) et un générateur de chaleur (2) logé dans ledit conduit vertical (51) parcouru vers le haut par un mouvement convectif dû à un flux ascendant d'air chauffé, le générateur de chaleur (2) comprenant des résistances électriques (50) configurées pour transférer de la chaleur à la masse d'air voisine et adjacente audit générateur de chaleur (2) et un boîtier extérieur (20), ladite structure unique (10) supportant des moyens de filtration de l'air (3) contre la poussière soulevée par le mouvement convectif de l'air, **caractérisé en ce que** lesdits moyens de filtration (3) et ledit générateur de chaleur (2) sont espacés latéralement et séparés par une cloison d'isolation thermique thermiquement isolante (4), et **en ce que** lesdites résistances électriques (50) sont configurées pour déclencher un mouvement convectif de l'air à travers ledit conduit vertical (51) selon un flux vertical (F2) lorsqu'elles sont chauffées par le passage de l'alimentation électrique lors de la mise en marche par ledit moyen de commande électronique et de gestion (100).

2. Le radiateur sec (1) selon la revendication 1, **caractérisé en ce que** lesdits moyens de filtration (3) comprennent une unité de ventilation (60) et une unité de filtration (61).

3. Le radiateur sec (1) selon l'une quelconque des revendications précédentes, **caractérisé en ce que** ladite unité de ventilation (60) est un ventilateur centrifuge ayant une aspiration axiale horizontale et une évacuation radiale verticale vers le haut.

4. Le radiateur sec (1) selon la revendication précédente, **caractérisé en ce que** la paroi avant (32) dudit boîtier extérieur (20) comporte une grille d'aspiration (40) pour ladite unité de filtration (61).

5. Le radiateur sec (1) selon la revendication précédente, **caractérisé en ce que** ladite unité de filtration (61) est interposée entre ladite grille d'aspiration (40) et ladite unité de ventilation (60).

6. Le radiateur sec (1) selon la revendication précédente, **caractérisé en ce que** la paroi supérieure (36) dudit boîtier extérieur (20) comporte une grille partielle (36 A) pour la distribution de l'air provenant de ladite unité de ventilation (60).

7. Le radiateur sec (1) selon l'une quelconque des revendications, **caractérisé en ce que** ladite unité de filtration (61) est logée de manière amovible depuis le haut à travers une ouverture (36B) de ladite paroi supérieure (36) dudit boîtier extérieur (20).

8. Le radiateur sec (1) selon la revendication 2, **caractérisé en ce que** ledit moyen de commande électronique et de gestion (100) est connecté à ladite unité de ventilation (60) desdits moyens de filtration de l'air (3) et à une unité sensorielle comprenant un thermostat de contrôle (101) des résistances électriques (50) dudit générateur de chaleur (2).

9. Le radiateur sec (1) selon la revendication précédente, **caractérisé en ce que** les capteurs comprennent en outre au moins un capteur de la quantité de poussière présente dans l'air entrant (103) et un capteur de la quantité de poussière présente dans l'air sortant (104).

10. Le radiateur sec (1) selon la revendication précédente, **caractérisé en ce que** ledit moyen de commande et de gestion électronique (100) active ladite unité de ventilation (60) lorsque ledit au moins un capteur de la quantité de poussière présente dans l'air entrant (103) signale avoir dépassé une valeur limite de concentration de poussière dans l'air.

11. Le radiateur sec (1) selon la revendication précédente, **caractérisé en ce qu'**il comprend une lampe bactéricide.
